# EUROPEAN PATENT APPLICATION

(11) **EP 4 451 023 A1**
(43) Date of publication of application: **23.10.2024**
(21) Application number: 22906442.3
(22) Date of filing: 09.12.2022
(51) Int. Cl.: G02B 6/12, G02B 6/122, G02B 6/136, G02B 6/26

(54) **WAVEGUIDE STRUCTURE AND MANUFACTURING METHOD THEREFOR, AND PHOTONIC INTEGRATED CIRCUIT AND MANUFACTURING METHOD THEREFOR**

(30) Priority: 13.12.2021 CN 202111516863
(71) Applicant: Shanghai Xizhi Technology Co., Ltd., Shanghai 201203 (CN)
(72) Inventor: SHEN, Yichen, Shanghai 201203 (CN); MENG, Huaiyu, Shanghai 201203 (CN); SU, Zhan, Shanghai 201203 (CN); SETIADI, Dadi, Shanghai 201203 (CN); XU, Yelong, Shanghai 201203 (CN); WU, Jianhua, Shanghai 201203 (CN); BAI, Yanfei, Shanghai 201203 (CN); ZHU, Yunpeng, Shanghai 201203 (CN); ZOU, Jinghui, Shanghai 201203 (CN)
(74) Representative: Murgitroyd & Company
(86) International application number: PCT/CN2022/138129
(87) International publication number: WO 2023/109695

(57) **Abstract**

A waveguide structure and a manufacturing method thereof, and a photonic integrated circuit and a manufacturing method thereof are disclosed. The waveguide structure and the manufacturing method thereof include: forming a first material layer; forming a first waveguide and a second waveguide based on the first material layer, wherein the first waveguide and the second waveguide are spaced apart from each other; forming a second material layer; and forming a waveguide coupling structure based on the second material layer, wherein the waveguide coupling structure is optically coupled to the first waveguide and the second waveguide respectively, to optically connect the first waveguide and the second waveguide. This can make a waveguide connection range not only limited to an area defined by one exposure, but also interconnect the waveguides in different exposure areas, reduce accuracy requirements for alignment during waveguide connection, and further effectively avoid joint defects during the waveguide connection.

## Description

This application claims priority to Chinese Patent Application No. 202111516863.0, filed on December 13, 2021, and entitled "WAVEGUIDE STRUCTURE AND MANUFACTURING METHOD THEREOF, AND PHOTONIC INTEGRATED CIRCUIT AND MANUFACTURING METHOD THEREOF". The disclosure of the aforementioned application is incorporated herein by reference in its entirety.

### TECHNICAL FIELD

The present disclosure relates to the field of photonic integrated circuits, and in particular, to waveguide structures and manufacturing methods thereof, and photonic integrated circuits and manufacturing methods thereof.

### BACKGROUND

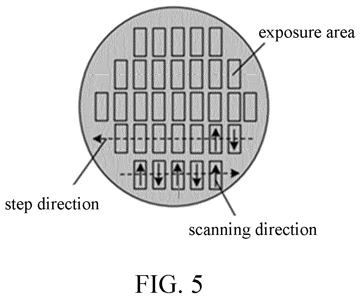

Photolithography is an important process in existing semiconductor manufacturing. Some advanced semiconductor manufacturing processes are limited to factors such as mask sizes and exposure process. For example, in a stepper exposure, one exposure may only expose a certain area of a wafer (photoresist on the wafer). Thus, different areas of the wafer need to be exposed respectively to realize the exposure of the entire wafer. As shown in FIG. 5, the different areas are usually spaced apart from each other, rather than being in direct connection with each other. In manufacturing of a photonic integrated circuit (PIC), waveguides and other optical devices are often integrated. Currently, due to intervals between the above different exposure areas, in a semiconductor wafer level process, waveguides in different areas are discontinuous, difficult to be interconnected.

### TECHNICAL PROBLEMS

Embodiments of the present application provide waveguide structures and manufacturing methods thereof, and a photonic integrated circuits and manufacturing method thereof, which can not only reduce an alignment accuracy requirement during waveguide interconnection, but also address the problem of a joint defect during the waveguide connection.

### TECHNICAL SOLUTIONS

In a first aspect, embodiments of the present application provide a manufacturing method of a waveguide structure, including: forming a first material layer; forming a first waveguide and a second waveguide based on the first material layer, wherein the first waveguide and the second waveguide are spaced apart from each other; and forming a waveguide coupling structure based on the second material layer, wherein the waveguide coupling structure is optically coupled to the first waveguide and the second waveguide respectively, to optically connect the first waveguide and the second waveguide.

In some embodiments, the step of forming of the first waveguide and the second waveguide based on the first material layer includes: forming a first photoresist layer on the first material layer; forming, in the first photoresist layer, an exposure pattern corresponding to the first waveguide by performing a first exposure process on the first photoresist layer in a first area; and forming, in the first photoresist layer, an exposure pattern corresponding to the second waveguide by performing a second exposure process on the first photoresist layer in a second area.

In some embodiments, the first area and the second area are spaced apart from each other.

In some embodiments, the waveguide coupling structure has a first end and a second end, the first end of the waveguide coupling structure is coupled to the first waveguide, and the second end of the waveguide coupling structure is coupled to the second waveguide.

In some embodiments, at least one of the first end and the second end comprises a tapered waveguide.

In some embodiments, the first area is a maximum area that a photolithography machine can achieve in a single exposure, and the second area is a maximum area that the photolithography machine can achieve in a single exposure.

In some embodiments, the step of forming of the waveguide coupling structure based on the second material layer includes: forming a second photoresist layer on the second material layer; and performing a waveguide coupling structure exposure process on the second photoresist layer to form, in the second photoresist layer, an exposure pattern corresponding to the waveguide coupling structure.

In some embodiments, the first exposure process and the second exposure process are performed by using a first mask, so as to form, in the first photoresist, the exposure pattern corresponding to the first waveguide and the exposure pattern corresponding to the second waveguide.

In some embodiments, the waveguide coupling structure exposure process is performed by using a second mask, so as to form, in the second photoresist, the exposure pattern corresponding to the waveguide coupling structure.

In some embodiments, the step of forming of the first waveguide and the second waveguide based on the first material layer includes: etching the first material layer to form the first waveguide and the second waveguide.

Embodiments of the present disclosure provide a manufacturing method of a waveguide structure, including: forming a first material layer; forming a first waveguide unit, a second waveguide unit, and a third waveguide unit based on the first material layer, wherein the first waveguide unit and the second waveguide unit are spaced apart from each other, and the second waveguide unit and the third waveguide unit are spaced apart from each other, each of the first waveguide unit, the second waveguide unit, and the third waveguide unit comprising one or more waveguides; forming a second material layer; and forming a first waveguide coupling structure and a second waveguide coupling structure based on the second material layer; wherein the first waveguide coupling structure is optically coupled to the first waveguide unit and the second waveguide unit respectively, to optically connect the first waveguide unit and the second waveguide unit; the second waveguide coupling structure is optically coupled to the second waveguide unit and the third waveguide unit respectively, to optically connect the second waveguide unit and the third waveguide unit; and the first waveguide coupling structure is coupled to a first position of the second waveguide unit, and the second waveguide coupling structure is coupled to a second position of the second waveguide unit.

In some embodiments, the step of forming of the first waveguide unit, the second waveguide unit, and the third waveguide unit based on the first material layer includes: forming a first photoresist layer on the first material layer; forming, in the first photoresist layer, an exposure pattern corresponding to the first waveguide unit by performing a first exposure process on the first photoresist layer in a first area; forming, in the first photoresist layer, an exposure pattern corresponding to the second waveguide unit by performing a second exposure process on the first photoresist layer in a second area; and forming, in the first photoresist layer, an exposure pattern corresponding to the third waveguide unit by performing a third exposure process on the first photoresist layer in a third area.

In some embodiments, the first area and the second area are spaced apart from each other, and the second area and the third area are spaced apart from each other.

In some embodiments, each of the first waveguide coupling structure and the second waveguide coupling structure has a first end and a second end, the first end and the second end of the first waveguide coupling structure are respectively coupled to the first waveguide unit and the second waveguide unit, and the first end and the second end of the second waveguide coupling structure are respectively coupled to the second waveguide unit and the third waveguide unit.

In some embodiments, at least one of the first end and the second end of the first waveguide coupling structure and at least one of the first end and the second end of the second waveguide coupling structure include a tapered waveguide.

In some embodiments, each of the first area, the second area, and the third area is a maximum area that a photolithography machine can achieve in a single exposure.

In some embodiments, the step of forming of the first waveguide coupling structure and the second waveguide coupling structure based on the second material layer includes: forming a second photoresist layer on the second material layer; and performing a waveguide coupling structure exposure process on the second photoresist layer to form, in the second photoresist layer, exposure patterns respectively corresponding to the first waveguide coupling structure and the second waveguide coupling structure.

In some embodiments, the first exposure process, the second exposure process, and the third exposure process are performed by using a first mask, so as to form, in the first photoresist, the exposure patterns corresponding to the first waveguide unit, the second waveguide unit, and the third waveguide unit.

In some embodiments, the waveguide coupling structure exposure process is performed by using a second mask, so as to simultaneously form, in the second photoresist, the exposure patterns respectively corresponding to the first waveguide coupling structure and the second waveguide coupling structure.

In some embodiments, the step of forming of the first waveguide unit, the second waveguide unit, and the third waveguide unit based on the first material layer includes: etching the first material layer to form the first waveguide unit, the second waveguide unit, and the third waveguide unit.

Embodiments of the present disclosure provide a waveguide structure, including: a first waveguide and a second waveguide, wherein during exposure processes for forming the first waveguide and the second waveguide, exposure areas of the first waveguide and the second waveguide respectively correspond to a first area and a second area, and the first area and the second area are spaced apart from each other, so that the first waveguide and the second waveguide are spaced apart from each other; and a waveguide coupling structure, wherein the waveguide coupling structure is optically coupled to the first waveguide and the second waveguide respectively, to optically connect the first waveguide and the second waveguide.

In some embodiments, the first area is a maximum area that a photolithography machine can achieve in a single exposure, and the second area is a maximum area that the photolithography machine can achieve in a single exposure.

In some embodiments, the waveguide coupling structure has a first end and a second end, the first end of the waveguide coupling structure is coupled to the first waveguide, and the second end of the waveguide coupling structure is coupled to the second waveguide.

In some embodiments, the first waveguide and the second waveguide are formed based on a first material layer, and the waveguide coupling structure is formed based on a second material layer.

In some embodiments, at least one of the first end and the second end includes a tapered waveguide.

An embodiment of the present disclosure provides a waveguide structure, including: a first waveguide unit, a second waveguide unit, and a third waveguide unit, wherein during exposure processes for forming the first waveguide unit, the second waveguide unit, and the third waveguide unit, exposure areas of the first waveguide unit, the second waveguide unit, and the third waveguide unit respectively correspond to a first area, a second area, and a third area, the first area and the second area are spaced apart from each other, so that the first waveguide unit and the second waveguide unit are spaced apart from each other, and the second area and the third area are spaced apart from each other, so that the second waveguide unit and the third waveguide unit are spaced apart from each other; a first waveguide coupling structure optically coupled to the first waveguide unit and the second waveguide unit respectively, to optically connect the first waveguide unit and the second waveguide unit; and a second waveguide coupling structure optically coupled to the second waveguide unit and the third waveguide unit respectively, to optically connect the first waveguide unit and the second waveguide unit, wherein the first waveguide coupling structure is coupled to a first position of the second waveguide unit, and the second waveguide coupling structure is coupled to a second position of the second waveguide unit.

In some embodiments, each of the first area, the second area, and the third area is a maximum area that a photolithography machine can achieve in a single exposure.

In some embodiments, each of the first waveguide coupling structure and the second waveguide coupling structure has a first end and a second end, the first end and the second end of the first waveguide coupling structure are respectively coupled to the first waveguide unit and the second waveguide unit, and the first end and the second end of the second waveguide coupling structure are respectively coupled to the second waveguide unit and the third waveguide unit.

In some embodiments, the first waveguide unit, the second waveguide unit, and the third waveguide unit are formed based on a first material layer, and the first waveguide coupling structure and the second waveguide coupling structure are formed based on a second material layer.

In some embodiments, at least one of the first end and the second end of the first waveguide coupling structure and at least one of the first end and the second end of the second waveguide coupling structure include a tapered waveguide.

An embodiment of the present disclosure provides a manufacturing method of a photonic integrated circuit, and the method includes manufacturing a waveguide structure using the manufacturing method of the waveguide structure as described in the present disclosure.

In some embodiments, the first waveguide is located in a first area, the second waveguide is located in a second area, the first area and the second area respectively correspond to exposure areas for forming the first waveguide and the second waveguide, and the first area and the second area are spaced apart from each other, so that the first waveguide and the second waveguide are spaced apart from each other.

In some embodiments, a plurality of photonic devices is formed in the first area, and a plurality of photonic devices is formed in the second area. At least one of the plurality of photonic devices in the first area is coupled to the first waveguide, and at least one of the plurality of photonic devices in the second area is coupled to the second waveguide.

In some embodiments, based on a third material layer, the plurality of photonic devices are formed in the first area and the plurality of photonic devices are formed in the second area.

In some embodiments, before the step of forming of the first waveguide and the second waveguide, the plurality of photonic devices are formed in the first area and the plurality of photonic devices are formed in the second area.

In some embodiments, based on the second material layer, a plurality of photonic devices are formed in the first area and a plurality of photonic devices are formed in the second area.

An embodiment of the present disclosure provides a photonic integrated circuit including the waveguide structures as described in the present disclosure.

In some embodiments, the first waveguide is located in a first area, the secondwaveguide is located in a second area, the first area and the second area respectively correspond to exposure areas for forming the first waveguide and the second waveguide , and the first area and the second area are spaced apart from each other, so that the first waveguide and the second waveguide are spaced apart from each other.

In some embodiments, the photonic integrated circuit includes a plurality of photonic devices located in the first area and a plurality of photonic devices located in the second area, wherein at least one of the plurality of photonic devices in the first area is coupled to the first waveguide, and at least one of the plurality of photonic devices in the second area is coupled to the second waveguide.

### BENEFICIAL EFFECTS

The waveguide connection solutions provided by the embodiments of the present disclosure can make a waveguide connection range in photonic integration not only limited to an area defined by one exposure, but also interconnect the waveguides in different exposure areas, reduce an accuracy requirement for alignment during waveguide connection, and further effectively avoid a joint defect during waveguide connection. A solution to address long-standing problems related to waveguide connection in this field is proposed. In addition, for such interconnection of waveguides formed in different exposure areas, the connection methods/connection areas can be changed according to a waveguide scale or other needs, which greatly improves flexibility of the connection. Different manufacturers or suitable stages may be selected flexibly to complete the manufacturing process of the waveguides and the manufacturing process of the waveguide coupling structure. In addition, the interconnection may be achieved at a wafer level process, reducing additional costs.

Various aspects, features, advantages, etc. of the embodiments of the present disclosure will be described in detail below with reference to the accompanying drawings. The above aspects, features, advantages, etc. of the present disclosure will become clearer from the following detailed description in conjunction with the accompanying drawings.

Reference is made to the following description and to the accompanying drawings, specific embodiments of the invention are disclosed in detail and illustrate the manner in which the principles of the present disclosure may be employed. It should be understood that embodiments of the present disclosure are not thereby limited in scope. Embodiments of the present disclosure include numerous alterations, modifications, and equivalents within the spirit and scope of the appended claims.

Features described and/or illustrated with respect to one embodiment may be used in the same or similar manner in one or more other embodiments, combined with features in the other embodiments, or in place of features in the other embodiments.

It should be emphasized that the term "comprising" when used herein refers to the presence of features, integers, steps, or components but does not exclude the presence or addition of one or more other features, integers, steps, or components.

### BRIEF DESCRIPTION OF THE DRAWINGS

In order to more clearly illustrate the technical solutions in the embodiments of the present disclosure, the drawings needed to be used in the description of the embodiments will be briefly introduced below. Apparently, the drawings in the following description are only some embodiments of the present disclosure. For those skilled in the art, other drawings can also be obtained based on these drawings without exerting creative efforts.
FIG. 1 shows waveguides in different areas.
FIG. 2a shows an exposure area using a second mask in a single exposure process of a second photoresist layer. FIG. 2b shows a pattern corresponding to a waveguide coupling structure in the second mask.
FIG. 3 shows a schematic diagram of a formed waveguide coupling structure corresponding to the exposure area in FIG. 2a.
FIG. 4 shows optical connections between waveguides in six areas.
FIG. 5 is a schematic diagram of a stepper exposure.

### EMBODIMENTS OF THE INVENTION

In order to facilitate understanding of various aspects, features, and advantages of the technical solutions of the present disclosure, the present disclosure is described in detail below with reference to the accompanying drawings. It should be understood that the various embodiments described below are only for illustration and are not intended to limit the scope of the present disclosure.

The word "including" mentioned in this document is an open-ended term and should be interpreted as "including but not limited to". "Approximately" means that within an acceptable error range, those skilled in the art can solve the technical problem within a certain error range and basically achieve the technical effect.

In addition, the term "connect" here includes any direct and indirect means of connection. Therefore, if one first device is connected to one second device, it means that the first device can be directly connected to the second device, or indirectly connected to the second device through other devices.

Descriptions such as "first" and "second" in this document are used to distinguish different devices, modules, structures, etc., and do not represent an order, nor do they limit "first" and "second" to be different types. In addition, some of the processes described in the specification, claims, and above-mentioned drawings of this disclosure include multiple operations that appear in a specific order. These operations may be performed out of the order in which they appear in this document or may be performed in parallel. Sequence numbers of operations, such as 101, 102, etc., are only used to distinguish different operations, and do not represent any execution order. Additionally, these processes may include more or fewer operations, and the operations may be performed sequentially or in parallel.

For example, in the manufacturing of photonic integrated circuits (PICs), waveguides and other optical devices are usually integrated. At this time, due to intervals between different exposure areas, waveguides in different areas are discontinuous, and are difficult to be interconnected.

For the first waveguide and the second waveguide respectively formed in different exposure areas, in a process for optically coupling the first waveguide to the second waveguide, one way is to set a connection waveguide directly connected to the first waveguide and the second waveguide in a spacing area therebetween. The inventor realized that this usually requires high-precision alignment and splicing of exposure patterns in different areas during exposure, so as to align the corresponding waveguides. This is often difficult to achieve, and may result in a shape defect at a connection of the connection waveguide, an incorrect joint, or the like, due to repeated exposure or an exposure defect at the connection of the exposure patterns, etc., causing a light loss at the joint and low product yield.

The inventors provide the following embodiments.

### Embodiment 1

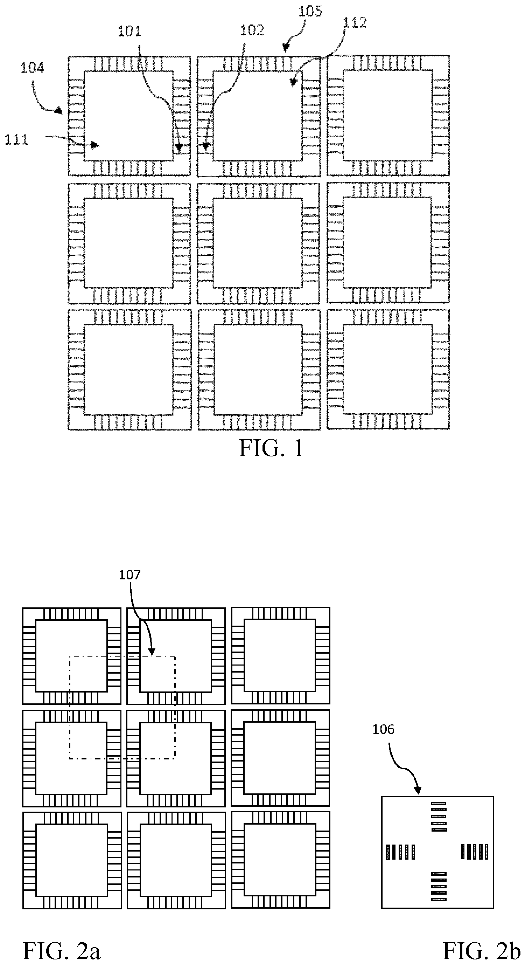

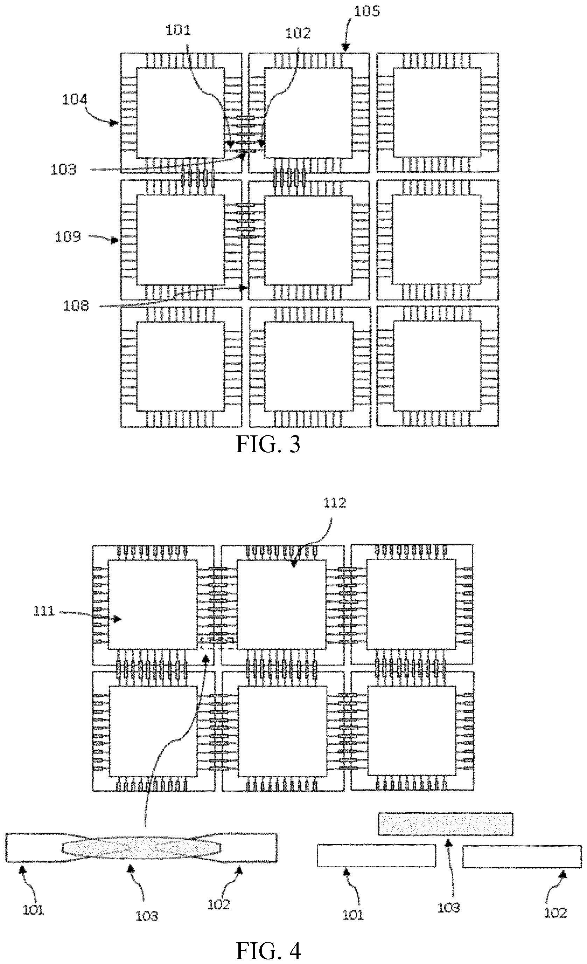

In some exemplary embodiments of the present disclosure, a manufacturing method of a waveguide structure includes:
forming a first material layer;
forming a first waveguide 101 and a second waveguide 102 based on the first material layer as shown in FIG. 1, wherein the first waveguide and the second waveguide are spaced apart from each other;
forming a second material layer; and
forming a waveguide coupling structure 103 based on the second material layer as shown in FIG. 3, wherein the waveguide coupling structure is optically coupled to the first waveguide 101 and the second waveguide 102 respectively, to optically connect the first waveguide and the second waveguide.

In some exemplary embodiments, a method for manufacturing a photonic integrated circuit is provided, which includes using the above-mentioned manufacturing method of the waveguide structure to manufacture the waveguide structure.

In some exemplary embodiments, a waveguide structure is provided. As shown in FIG. 3, the waveguide structure includes: the first waveguide 101, the second waveguide 102, and the waveguide coupling structure 103. During exposure processes for forming the first waveguide and the second waveguide, exposure areas of the first waveguide and the second waveguide respectively correspond to a first area 104 and a second area 105, the first area and the second area are spaced apart from each other, so that the first waveguide and the second waveguide are spaced apart from each other. The waveguide coupling structure is optically coupled to the first waveguide and the second waveguide respectively, to optically connect the first waveguide and the second waveguide.

In some exemplary embodiments, a photonic integrated circuit is provided, including the above waveguide structure.

In some embodiments, the first waveguide is located in the first area, and the second waveguide is located in the second area. The first area and the second area are corresponding different exposure areas when the first waveguide and the second waveguide are formed, the first area and the second area are spaced apart from each other, so that the first waveguide and the second waveguide are spaced apart. A waveguide connection structure enables the waveguides in different exposure areas to be connected.

FIG. 1 shows waveguides formed in multiple areas, wherein different areas are spaced apart from each other, so that the waveguides therein are not optically interconnected.

In some embodiments, the step of forming of the waveguide coupling structure based on the second material layer includes: forming a second photoresist layer on the second material layer, and performing a waveguide coupling structure exposure process on the second photoresist layer to form, in the second photoresist layer, an exposure pattern corresponding to the waveguide coupling structure. Referring to FIGS. 2a-2b, FIGS. 2a-2b show a corresponding pattern related to the waveguide coupling structure in a second mask 106 and an exposure area 107 for the second photoresist layer. In one exposure process performed on the second photoresist layer, the corresponding pattern of the waveguide coupling structure can be formed, and the waveguide coupling structure can be formed in subsequent process operations, which can interconnect the waveguides in different areas. For example, a waveguide in the first area 104 is interconnected with a waveguide the second area 105, a waveguide in the first area 105 is interconnected with a waveguide the second area 108, a waveguide in the first area 108 is interconnected with a waveguide the second area 109, and a waveguide in the first area 109 is interconnected with a waveguide the second area 104, as shown in FIG. 3. In some cases, for example, one exposure cannot interconnect all waveguides in the second area 105, which are to be connected with corresponding waveguides in the third area 108, with the corresponding waveguides to be connected in the third area 108. The second mask may continue to move relative to a wafer to expose other areas, and further, the exposure pattern corresponding to the waveguide coupling structure is continued to be formed in the second photoresist layer.

In FIG. 3, a schematic diagram of the formed waveguide coupling structure corresponding to the exposure area in FIG. 2a is shown.

In some embodiments, the step of forming of the first waveguide and the second waveguide based on the first material layer includes: forming a first photoresist layer on the first material layer; forming, in the first photoresist layer, an exposure pattern corresponding to the first waveguide by performing a first exposure process on the first photoresist layer in the first area; and forming, in the first photoresist layer, an exposure pattern corresponding to the second waveguide by performing a second exposure process on the first photoresist layer in the second area. As an example, the first area and the second area are spaced apart from each other. The waveguide coupling structure enables the waveguides in different areas to be connected to each other.

In some embodiments, the second mask 106 in FIG. 2b is used to perform the waveguide coupling structure exposure process, to simultaneously form exposure patterns respectively corresponding to a first waveguide coupling structure and a second waveguide coupling structure in the second photoresist layer, which enable to interconnect corresponding waveguides in the first area 104 and the second area 105, and interconnect corresponding waveguides in the second area 105 and the third area 108.

In some embodiments, the waveguide coupling structure has a first end and a second end, the first end of the waveguide coupling structure is coupled to the first waveguide, and the second end of the waveguide coupling structure is coupled to the second waveguide. For example, the waveguide coupling structure has an appropriate distance from the first waveguide and the second waveguide, which allows a light wave to be coupled and transmitted without contact. As another example, a projection of the waveguide coupling structure has a portion overlapped with the projections of the first waveguide and/or the second waveguide. For example, at least one of the first end and the second end includes a tapered waveguide. For example, a coupling part of the waveguides to be connected may also be tapered. Coupling the waveguides to be coupled through the waveguide coupling structure just requires the waveguides to close to the waveguide coupling structure within a certain distance, and does not need a direct physical contact, which reduces a high-precision requirement for an exposure alignment during the manufacturing process. In FIG. 4, the shapes of the tapered waveguides are schematically drawn; in an enlarged top view, an exemplary overlapping condition is drawn; and in an enlarged cross-sectional view, it is drawn that the waveguide coupling structure is exemplarily non-contact with the first waveguide and the second waveguide, that is, the light from the waveguide coupling structure enters the first waveguide and the second waveguide through non-contact coupling.

In some embodiments, some of the above-mentioned waveguide coupling structures may further include a reflective layer to reflect light, thereby realizing coupling between the waveguide coupling structure and the waveguide unit.

In some embodiments, the first area is a maximum area that a photolithography machine can achieve in a single exposure, and the second area is a maximum area that the photolithography machine can achieve in a single exposure. When exposing using, for example, a stepper lithography machine, an area of a single exposure corresponds to a corresponding exposure field that a mask/reticle can expose.

In some embodiments, the step of forming of the waveguide coupling structure based on the second material layer includes: forming the second photoresist layer on the second material layer, and performing the waveguide coupling structure exposure process on the second photoresist layer to form, in the second photoresist layer, the exposure pattern corresponding to the waveguide coupling structure.

In some embodiments, the first exposure process and the second exposure process are performed by using a first mask, so as to form, in the first photoresist, the exposure pattern corresponding to the first waveguide and the exposure pattern corresponding to the second waveguide. For example, a first piece of mask, that is, the first mask, is used to expose multiple areas on the wafer to form a pattern to be exposed in each of the areas, and then form waveguides in subsequent processes.

The waveguide coupling structure exposure process is performed by using a second mask, so as to form, in the second photoresist, the exposure pattern corresponding to the waveguide coupling structure.

The step of forming of the first waveguide and the second waveguide based on the first material layer includes: etching the first material layer to form the first waveguide and the second waveguide.

In some embodiments, manufacturing of a photonic integrated circuit includes using the manufacturing methods of the waveguide structure in the above embodiments. In addition, an operation of forming a photonic device may further be included. The formed photonic device includes, for example, an optical modulator, an optical phase shifter, an optical beam splitter, a grating coupler, a directional coupler, a multimode interference (MMI), etc., which may be connected to their respective exposure areas. For example, multiple photonic devices are formed in the first area, and multiple photonic devices are formed in the second area; and at least one of the photonic devices in the first area is coupled to the first waveguide, and at least one of the photonic devices in the second area is coupled to the second waveguide. In some embodiments, the formed photonic device may further include other necessary optical connection waveguides to connect the photonic devices in the first area to the first waveguide and to connect the photonic devices in the second area to the second waveguide. The photonic device may be formed based on the first material layer or the second material layer, but is not limited thereto, and may also be formed based on other material layers. In FIG. 4, for example, an area 111 indicated by a blank part in the first area may be arranged with photonic devices and waveguides interconnected with the photonic devices (connection relationship is not shown in the figure), which are further optically connected to, for example, a plurality of first waveguides. Similarly, an area 112 indicated by a blank part in the first area may be arranged with photonic devices, which are further optically connected to, for example, a plurality of second waveguides. The area 112 may be arranged with photonic devices and waveguides interconnected with the photonic devices (connection relationship is not shown in the figure), which are further optically connected to, for example, a plurality of second waveguides.

In some embodiments, the first material layer is formed firstly, and a plurality of waveguide units are formed based on the first material layer, such as a first waveguide unit, a second waveguide unit, and a third waveguide unit. After the plurality of waveguide units are formed, the second material layer is formed thereon, and at least one (one or more) waveguide coupling structure(s) are formed based on the second material layer. In some embodiments, the first material layer is formed firstly, a plurality of waveguide units and photonic devices are formed based on the first material layer; and then the second material layer is formed, and at least one (one or more) waveguide coupling structure(s) and/or photonic devices are formed based on the second material layer.

In some embodiments, the operation of forming the photonic device includes forming a third material layer, and forming a photonic device based on the third material layer.

In some embodiments, the third material layer may be formed or provided firstly, for example, the third material layer disposed on a substrate is provided, the photonic device is formed based on the third material layer; and then the second material layer is formed, and the waveguides to be connected are formed based on the second material layer, such as the first waveguide in the first area and the second waveguide in the second area. After the waveguides to be connected are formed, a waveguide connection structure is formed. For example, the photonic device is formed on the substrate, the plurality of waveguide units are provided on the photonic device, and the waveguide coupling structure is provided on the waveguide coupling units.

The materials of the first material layer, the second material layer, and the third material layer may be selected from silicon, silicon nitride, or group III-V materials.

In some embodiments, the photonic device and the waveguides connected to the photonic device may be formed using a same mask. For example, the aforementioned first mask may be used to form the photonic device and the above plurality of waveguide units to be connected.

In some embodiments, the plurality of waveguide units to be connected may be formed using the first mask, while the photonic device and other waveguides connected to the photonic device may be formed using a same mask, such as a third mask.
Embodiment 2. In some exemplary embodiments of the present disclosure, a manufacturing method of a waveguide structure includes:
forming a first material layer;
forming a first waveguide unit, a second waveguide unit, and a third waveguide unit based on the first material layer, wherein the first waveguide unit and the second waveguide unit are spaced apart from each other, and the second waveguide unit and the third waveguide unit are spaced apart from each other, each of the first waveguide unit, the second waveguide unit, and the third waveguide unit including one or more waveguides;
forming a second material layer; and
forming a first waveguide coupling structure and a second waveguide coupling structure based on the second material layer. The first waveguide coupling structure is optically coupled to the first waveguide unit and the second waveguide unit respectively, to optically connect the first waveguide unit and the second waveguide unit. The second waveguide coupling structure is optically coupled to the second waveguide unit and the third waveguide unit respectively, to optically connect the second waveguide unit and the third waveguide unit. The first waveguide coupling structure is coupled to a first position of the second waveguide unit, and the second waveguide coupling structure is coupled to a second position of the second waveguide unit.

The first waveguide unit may include, for example, the first waveguide 101 in Embodiment 1 (refer to FIG. 1), and the second waveguide unit may include the second waveguide 102 in Embodiment 1. For example, the first waveguide unit includes multiple waveguides located near four sides of the first area 104 in FIG. 1, and the second waveguide unit includes multiple waveguides located near four sides of the second area 105 in FIG. 1. The first waveguide coupling structure may, for example, use the waveguide coupling structure(s) and coupling method(s) in Embodiment 1, and the structures and manufacturing techniques related to them in Embodiment 1 may be incorporated into Embodiment 2.

In the present exemplary embodiments, a method of manufacturing a photonic integrated circuit is provided, which includes using the above-mentioned manufacturing method of the waveguide structure, to manufacture the waveguide structure.

In some exemplary embodiments, a waveguide structure is provided, which includes: a first waveguide unit, a second waveguide unit, and a third waveguide unit; a first waveguide coupling structure; and a second waveguide coupling structure. During exposure processes for forming the first waveguide unit, the second waveguide unit, and the third waveguide unit, exposure areas of the first waveguide unit, the second waveguide unit, and the third waveguide unit respectively correspond to a first area 104, a second area 105, and a third area 108. The first area and the second area are spaced apart from each other, so that the first waveguide unit and the second waveguide unit are spaced apart from each other. The second area and the third area are spaced apart from each other, so that the second waveguide unit and the third waveguide unit are spaced apart from each other. The first waveguide coupling structure is optically coupled to the first waveguide unit and the second waveguide unit respectively, to optically connect the first waveguide unit and the second waveguide unit. The second waveguide coupling structure is optically coupled to the second waveguide unit and the third waveguide unit respectively, to optically connect the first waveguide unit and the second waveguide unit. The first waveguide coupling structure is coupled to a first position of the second waveguide unit, and the second waveguide coupling structure is coupled to a second position of the second waveguide unit.

In some exemplary embodiments of the present disclosure, a photonic integrated circuit is provided, which includes the above waveguide structure.

In some embodiments, the step of forming of the first waveguide unit, the second waveguide unit, and the third waveguide unit based on the first material layer includes: forming a first photoresist layer on the first material layer; forming, in the first photoresist layer, an exposure pattern corresponding to the first waveguide unit by performing a first exposure process on the first photoresist layer in the first area 104; forming, in the first photoresist layer, an exposure pattern corresponding to the second waveguide unit by performing a second exposure process on the first photoresist layer in the second area 105; and forming, in the first photoresist layer, an exposure pattern corresponding to the third waveguide unit by performing a third exposure process on the first photoresist layer in the third area 108.

For example, the first area 104 and the second area 105 are spaced apart from each other, and the second area 105 and the third area 108 are spaced apart from each other. The first to third waveguide connection structure enable the waveguides in different areas to be connected. In some embodiments, each of the first waveguide coupling structure and the second waveguide coupling structure has a first end and a second end, the first end and the second end of the first waveguide coupling structure are respectively coupled to the first waveguide unit and the second waveguide unit, and the first end and the second end of the second waveguide coupling structure are respectively coupled to the second waveguide unit and the third waveguide unit. Optionally, at least one of the first end and the second end of the first waveguide coupling structure and at least one of the first end and the second end of the second waveguide coupling structure include a tapered waveguide. Between the first end and the second end may include a waveguide with an appropriate length. The tapered waveguide can make the waveguide coupling structure and the waveguide to be optically connected have an overlapping projection area, which realizes coupling connection in a larger projection area, thereby reducing a high-precision requirement for an exposure alignment. Optionally, some of the above-mentioned waveguide coupling structures may also include a reflective layer to reflect light, thereby realizing coupling between the waveguide coupling structure and the waveguide unit.

In some embodiments, each of the first area 104, the second area 105, and the third area 108 is a maximum area that a photolithography machine can achieve in a single exposure. When exposing using, for example, a stepper lithography machine, an area of a single exposure corresponds to a corresponding exposure field that a mask/reticle can expose.

In some embodiments, the step of forming of the first waveguide coupling structure and the second waveguide coupling structure based on the second material layer includes: forming a second photoresist layer on the second material layer, and performing a waveguide coupling structure exposure process on the second photoresist layer to form, in the second photoresist layer, exposure patterns respectively corresponding to the first waveguide coupling structure and the second waveguide coupling structure.

In some embodiments, the first exposure process, the second exposure process, and the third exposure process are performed by using a first mask, so as to form, in the first photoresist, the exposure patterns corresponding to the first waveguide unit, the second waveguide unit, and the third waveguide unit. For example, a first piece of mask, that is, the first mask, is used to expose multiple areas on the wafer to form a pattern to be exposed in each area, and then form waveguides in subsequent processes.

In some embodiments, the waveguide coupling structure exposure process is performed by using a second mask, so as to simultaneously form, in the second photoresist, the exposure patterns respectively corresponding to the first waveguide coupling structure and the second waveguide coupling structure.

In some embodiments, the step of forming of the first waveguide unit, the second waveguide unit, and the third waveguide unit includes: etching the first material layer to form the first waveguide unit, the second waveguide unit, and the third waveguide unit.

In some embodiments, manufacturing of a photonic integrated circuit includes using the manufacturing methods of the waveguide structure in the above embodiments. In addition, an operation of forming a photonic device may further be included. The formed photonic device includes, for example, an optical modulator, an optical phase shifter, an optical beam splitter, a grating coupler, a directional coupler, a multimode interference (MMI), etc., which may be connected to their respective exposure areas. In some embodiments, other necessary optical connection waveguides may also be included. The photonic device may be formed based on the first material layer or the second material layer.

In some embodiments, the first material layer is formed firstly, and a plurality of waveguide units are formed based on the first material layer, such as the first waveguide unit, the second waveguide unit, and the third waveguide unit. After the plurality of waveguide units are formed, the second material layer is formed thereon, and at least one (one or more) waveguide coupling structure(s) are formed based on the second material layer. In some embodiments, the first material layer is formed firstly, a plurality of waveguide units and photonic devices are formed based on the first material layer; and then the second material layer is formed, and at least one (one or more) waveguide coupling structure(s) and/or photonic devices are formed based on the second material layer.

In some embodiments, the operation of forming the photonic device includes forming a third material layer, and forming a photonic device based on the third material layer.

In some embodiments, the third material layer may be formed or provided firstly, for example, a third material layer disposed on a substrate is provided, the photonic device is formed based on the third material layer; and then the second material layer is formed, and the waveguides to be connected are formed based on the second material layer, such as the first waveguide in the first area and the second waveguide in the second area. After the waveguides to be connected are formed, a waveguide connection structure is formed. For example, the photonic device is formed on the substrate, the plurality of waveguide units are provided on the photonic device, and the waveguide coupling structure is provided on the waveguide units.

The materials of the first material layer, the second material layer, and the third material layer may be selected from silicon, silicon nitride, or group III-V materials.

In some embodiments, the photonic device and the waveguides connected to the photonic device may be formed using a same mask. For example, the aforementioned first mask may be used to form the photonic device and the above plurality of waveguide units to be connected.

In some embodiments, the plurality of waveguide units to be connected can be formed using the first mask, and the photonic device and some waveguides connected to the photonic device can be formed using a same mask, such as the third mask.

The waveguide connection solutions provided by the embodiments of the present disclosure can make a waveguide connection range in photonic integration not only limited to an area defined by one exposure, but also interconnect the waveguides in different exposure areas, reduce an accuracy requirement for alignment during waveguide connection, and further effectively avoid a joint defect during waveguide connection. A solution to address long-standing problems related to waveguide connection in this field is proposed. In addition, for such interconnection of waveguides formed in different exposure areas, the connection methods/connection areas can be changed according to a waveguide scale or other needs, which greatly improves flexibility of the connection. Different manufacturers or suitable stages may be selected flexibly to complete the manufacturing process of the waveguides and the manufacturing process of the waveguide coupling structure. In addition, the interconnection may be achieved at a wafer level process, reducing additional costs.

Those skilled in the art should understand that the above disclosure is only implementation modes of the present disclosure, which certainly cannot be used to limit the scope of the patent protection claimed by the present disclosure. Equivalent changes made according to the implementation modes of the present disclosure still fall within the scope encompassed by the claims of the present invention.

## Claims

1. A manufacturing method of a waveguide structure, **characterized by** comprising:
forming a first material layer;
forming a first waveguide and a second waveguide based on the first material layer, wherein the first waveguide and the second waveguide are spaced apart from each other;
forming a second material layer; and
forming a waveguide coupling structure based on the second material layer, wherein the waveguide coupling structure is optically coupled to the first waveguide and the second waveguide respectively, to optically connect the first waveguide and the second waveguide.

2. The manufacturing method of the waveguide structure of claim 1, wherein the forming of the first waveguide and the second waveguide based on the first material layer comprises:
forming a first photoresist layer on the first material layer;
forming, in the first photoresist layer, an exposure pattern corresponding to the first waveguide by performing a first exposure process on the first photoresist layer in a first area; and
forming, in the first photoresist layer, an exposure pattern corresponding to the second waveguide by performing a second exposure process on the first photoresist layer in a second area.

3. The manufacturing method of the waveguide structure of claim 2, wherein the first area and the second area are spaced apart from each other.

4. The manufacturing method of the waveguide structure of claim 3, wherein the waveguide coupling structure has a first end and a second end, the first end of the waveguide coupling structure is coupled to the first waveguide, and the second end of the waveguide coupling structure is coupled to the second waveguide.

5. The manufacturing method of the waveguide structure of claim 4, wherein at least one of the first end and the second end comprises a tapered waveguide.

6. The manufacturing method of the waveguide structure of claim 2, wherein the first area is a maximum area that a photolithography machine can achieve in a single exposure, and the second area is a maximum area that the photolithography machine can achieve in a single exposure.

7. The manufacturing method of the waveguide structure of claim 1, wherein the forming of the waveguide coupling structure based on the second material layer comprises:
forming a second photoresist layer on the second material layer; and
performing a waveguide coupling structure exposure process on the second photoresist layer to form, in the second photoresist layer, an exposure pattern corresponding to the waveguide coupling structure.

8. The manufacturing method of the waveguide structure of claim 2, wherein the first exposure process and the second exposure process are performed by using a first mask, so as to form, in the first photoresist, the exposure pattern corresponding to the first waveguide and the exposure pattern corresponding to the second waveguide.

9. The manufacturing method of the waveguide structure of claim 7, wherein the waveguide coupling structure exposure process is performed by using a second mask, so as to form, in the second photoresist, the exposure pattern corresponding to the waveguide coupling structure.

10. The manufacturing method of the waveguide structure of claim 1, wherein the forming of the first waveguide and the second waveguide based on the first material layer comprises: etching the first material layer to form the first waveguide and the second waveguide.

11. A manufacturing method of a waveguide structure, **characterized by** comprising:
forming a first material layer;
forming a first waveguide unit, a second waveguide unit, and a third waveguide unit based on the first material layer, wherein the first waveguide unit and the second waveguide unit are spaced apart from each other, and the second waveguide unit and the third waveguide unit are spaced apart from each other, each of the first waveguide unit, the second waveguide unit, and the third waveguide unit comprising one or more waveguides;
forming a second material layer; and
forming a first waveguide coupling structure and a second waveguide coupling structure based on the second material layer,
wherein the first waveguide coupling structure is optically coupled to the first waveguide unit and the second waveguide unit respectively, to optically connect the first waveguide unit and the second waveguide unit,
the second waveguide coupling structure is optically coupled to the second waveguide unit and the third waveguide unit respectively, to optically connect the second waveguide unit and the third waveguide unit, and
the first waveguide coupling structure is coupled to a first position of the second waveguide unit, and the second waveguide coupling structure is coupled to a second position of the second waveguide unit.

12. The manufacturing method of the waveguide structure of claim 11, wherein the forming of the first waveguide unit, the second waveguide unit, and the third waveguide unit based on the first material layer comprises:
forming a first photoresist layer on the first material layer;
forming, in the first photoresist layer, an exposure pattern corresponding to the first waveguide unit by performing a first exposure process on the first photoresist layer in a first area;
forming, in the first photoresist layer, an exposure pattern corresponding to the second waveguide unit by performing a second exposure process on the first photoresist layer in a second area; and
forming, in the first photoresist layer, an exposure pattern corresponding to the third waveguide unit by performing a third exposure process on the first photoresist layer in a third area.

13. The manufacturing method of the waveguide structure of claim 12, wherein the first area and the second area are spaced apart from each other, and the second area and the third area are spaced apart from each other.

14. The manufacturing method of the waveguide structure of claim 13, wherein:
each of the first waveguide coupling structure and the second waveguide coupling structure has a first end and a second end,
the first end and the second end of the first waveguide coupling structure are respectively coupled to the first waveguide unit and the second waveguide unit, and
the first end and the second end of the second waveguide coupling structure are respectively coupled to the second waveguide unit and the third waveguide unit.

15. The manufacturing method of the waveguide structure of claim 14, wherein at least one of the first end and the second end of the first waveguide coupling structure and at least one of the first end and the second end of the second waveguide coupling structure comprise a tapered waveguide.

16. The manufacturing method of the waveguide structure of claim 12, wherein each of the first area, the second area, and the third area is a maximum area that a photolithography machine can achieve in a single exposure.

17. The manufacturing method of the waveguide structure of claim 11, wherein the forming of the first waveguide coupling structure and the second waveguide coupling structure based on the second material layer comprises:
forming a second photoresist layer on the second material layer; and
performing a waveguide coupling structure exposure process on the second photoresist layer to form, in the second photoresist layer, exposure patterns respectively corresponding to the first waveguide coupling structure and the second waveguide coupling structure.

18. The manufacturing method of the waveguide structure of claim 12, wherein the first exposure process, the second exposure process, and the third exposure process are performed by using a first mask, so as to form, in the first photoresist, the exposure patterns corresponding to the first waveguide unit, the second waveguide unit, and the third waveguide unit.

19. The manufacturing method of the waveguide structure of claim 17, wherein the waveguide coupling structure exposure process is performed by using a second mask, so as to simultaneously form, in the second photoresist, the exposure patterns respectively corresponding to the first waveguide coupling structure and the second waveguide coupling structure.

20. The manufacturing method of the waveguide structure of claim 11, wherein the forming of the first waveguide unit, the second waveguide unit, and the third waveguide unit based on the first material layer comprises: etching the first material layer to form the first waveguide unit, the second waveguide unit, and the third waveguide unit.

21. A waveguide structure, **characterized by** comprising:
a first waveguide and a second waveguide, wherein during exposure processes for forming the first waveguide and the second waveguide, exposure areas of the first waveguide and the second waveguide respectively correspond to a first area and a second area, and the first area and the second area are spaced apart from each other, so that the first waveguide and the second waveguide are spaced apart from each other; and
a waveguide coupling structure, wherein the waveguide coupling structure is optically coupled to the first waveguide and the second waveguide respectively, to optically connect the first waveguide and the second waveguide.

22. The waveguide structure of claim 21, wherein the first area is a maximum area that a photolithography machine can achieve in a single exposure, and the second area is a maximum area that the photolithography machine can achieve in a single exposure.

23. The waveguide structure of claim 21, wherein the waveguide coupling structure has a first end and a second end, the first end of the waveguide coupling structure is coupled to the first waveguide, and the second end of the waveguide coupling structure is coupled to the second waveguide.

24. The waveguide structure of claim 23, wherein the first waveguide and the second waveguide are formed based on a first material layer, and the waveguide coupling structure is formed based on a second material layer.

25. The waveguide structure of claim 23, wherein at least one of the first end and the second end comprises a tapered waveguide.

26. A waveguide structure, **characterized by** comprising:
a first waveguide unit, a second waveguide unit, and a third waveguide unit,
wherein during exposure processes for forming the first waveguide unit and the second waveguide unit, exposure areas of the first waveguide unit, the second waveguide unit, and the third waveguide unit respectively correspond to a first area, a second area, and a third area,
the first area and the second area are spaced apart from each other, so that the first waveguide unit and the second waveguide unit are spaced apart from each other, and
the second area and the third area are spaced apart from each other, so that the second waveguide unit and the third waveguide unit are spaced apart from each other;
a first waveguide coupling structure optically coupled to the first waveguide unit and the second waveguide unit respectively, to optically connect the first waveguide unit and the second waveguide unit; and
a second waveguide coupling structure optically coupled to the second waveguide unit and the third waveguide unit respectively, to optically connect the first waveguide unit and the second waveguide unit,
wherein the first waveguide coupling structure is coupled to a first position of the second waveguide unit, and the second waveguide coupling structure is coupled to a second position of the second waveguide unit.

27. The waveguide structure of claim 26, wherein each of the first area, the second area, and the third area are a maximum area that a photolithography machine can achieve in a single exposure.

28. The waveguide structure of claim 26, wherein:
each of the first waveguide coupling structure and the second waveguide coupling structure has a first end and a second end,
the first end and the second end of the first waveguide coupling structure are respectively coupled to the first waveguide unit and the second waveguide unit, and
the first end and the second end of the second waveguide coupling structure are respectively coupled to the second waveguide unit and the third waveguide unit.

29. The waveguide structure of claim 26, wherein the first waveguide unit, the second waveguide unit, and the third waveguide unit are formed based on a first material layer, and the first waveguide coupling structure and the second waveguide coupling structure are formed based on a second material layer.

30. The waveguide structure of claim 29, wherein at least one of the first end and the second end of the first waveguide coupling structure and at least one of the first end and the second end of the second waveguide coupling structure comprise a tapered waveguide.

31. A manufacturing method of a photonic integrated circuit, **characterized by** comprising manufacturing a waveguide structure using the manufacturing method of the waveguide structure according to any one of claims 1 and 4-20.

32. The manufacturing method of the photonic integrated circuit of claim 31, wherein the first waveguide is located in a first area, the second waveguide is located in a second area,
the first area corresponds to an exposure area for forming the first waveguide, and the second area corresponds to an exposure area for forming the second waveguide, the exposure area for forming the first waveguide being different from the exposure area for forming the second waveguide, and
the first area and the second area are spaced apart from each other, so that the first waveguide and the second waveguide are spaced apart from each other.

33. The manufacturing method of the photonic integrated circuit of claim 32, comprising forming a plurality of photonic devices in the first area, and forming a plurality of photonic devices in the second area,
wherein at least one of the plurality of photonic devices in the first area is coupled to the first waveguide, and at least one of the plurality of photonic devices in the second area is coupled to the second waveguide.

34. The manufacturing method of the photonic integrated circuit of claim 33, comprising forming, based on a third material layer, the plurality of photonic devices in the first area and the plurality of photonic devices in the second area.

35. The manufacturing method of the photonic integrated circuit of claim 34, comprising: before the forming of the first waveguide and the second waveguide, forming the plurality of photonic devices in the first area and the plurality of photonic devices in the second area.

36. The manufacturing method of the photonic integrated circuit of claim 33, comprising: forming, based on the second material layer, a plurality of photonic devices in the first area and a plurality of photonic devices in the second area.

37. A photonic integrated circuit, **characterized by** comprising the waveguide structure according to any one of claims 21-25.

38. The photonic integrated circuit of claim 37, wherein the first waveguide is located in a first area, the second waveguide is located in a second area,
the first area corresponds to an exposure area for forming the first waveguide, and the second area corresponds to an exposure area for forming the second waveguide, the exposure area for forming the first waveguide being different from the exposure area for forming the second waveguide, and
the first area and the second area are spaced apart from each other, so that the first waveguide and the second waveguide are spaced apart from each other.

39. The photonic integrated circuit of claim 38, comprising a plurality of photonic devices located in the first area and a plurality of photonic devices located in the second area,
wherein at least one of the plurality of photonic devices in the first area is coupled to the first waveguide, and at least one of the plurality of photonic devices in the second area is coupled to the second waveguide.
